# EUROPÄISCHE PATENTSCHRIFT

(11) **EP 3 618 228 B1**
(45) Veröffentlichungstag und Bekanntmachung des Hinweises auf die Patenterteilung: **02.06.2021**
(21) Anmeldenummer: 18191639.6
(22) Anmeldetag: 30.08.2018
(51) Int. Cl.: H02K 1/14, H02K 21/16, H02K 29/03

(54) **STATORANORDNUNG FÜR EINEN ROTATORISCHEN SYNCHRONMOTOR**
STATOR ASSEMBLY FOR A ROTATIONAL SYNCHRONOUS MOTOR
DISPOSITIF STATOR POUR UN MOTEUR SYNCHRONE ROTATIF

(43) Veröffentlichungstag der Anmeldung: 04.03.2020
(73) Patentinhaber: ETEL S.A., 2112 Môtiers (CH)
(72) Erfinder: MITTAL, Manish, 2000 Neuchatel (CH); POURCHET, Johann, 25650 La Chaux de Gilley (FR)
(74) Vertreter: Maikowski & Ninnemann Patentanwälte Partnerschaft mbB

(56) Entgegenhaltungen:
- DE-A1-102005 022 548
- US-A1- 2010 117 465
- US-A1- 2012 112 594
- US-A1- 2018 102 678

## Beschreibung

Die vorliegende Erfindung betrifft eine Statoranordnung, insbesondere für einen rotatorischen Synchronmotor. Sie betrifft ferner einen rotatorischen Synchronmotor umfassend eine solche Statoranordnung.

Viele Elektromotoren, darunter rotatorische Synchronmotoren, umfassen eine Statoranordnung mit einer Mehrzahl von Spulen. Die Spulen sind dabei üblicherweise über einen Umfang der Statoranordnung verteilt angeordnet, derart dass sie einen Rotorbereich des Elektromotors umgeben. Oft weist dabei der Stator an seiner Innenseite Zähne auf, die zueinander benachbart jeweils auf eine Mittelachse des Rotorbereichs ausgerichtet sind. Dabei ist um wenigstens einige dieser Zähne jeweils eine der Spulen angeordnet, derart, dass die Wicklung der Spule in der Nut, d.h. dem Zwischenraum, zwischen jeweils benachbarten Zähnen aufgenommen ist.

Für die Leistung eines Motors ist es günstig, ein großes Spulenvolumen angrenzend an den Rotorbereich bereitzustellen. Gleichzeitig führt eine übermäßige Reduktion des durch die Zähne des Stators eingenommenen Volumens, etwa durch sehr dünn ausgebildete Zähne, schnell zur magnetischen Sättigung des die Spulen umgebenden Materials, wodurch wiederum die Leistung und die Effizienz des Motors nachteilhaft beeinträchtigt sind. Herkömmliche Statoranordnungen beruhen demnach auf einem Kompromiss zwischen der Größe des Zwischenraums zwischen benachbarten Zähnen und der Zahnbreite.

Zudem sind unterschiedliche Techniken bekannt, den mit größerem radialen Abstand von der Mittelachse des Rotorbereichs größer werdenden Umfang, und damit das größer werdende Volumen, innerhalb der Statoranordnung durch entsprechende Gestaltung der Zähne und/oder der Spulen vorteilhaft zu nutzen.

Aus der US 2009/0108702 A1 ist eine Statoranordnung bekannt, bei der eine Breite sowohl des Zahnprofils als auch der Nut zwischen benachbarten Zähnen mit größerem Abstand von der Mittelachse des Rotors zunimmt. Außerdem sind aus der DE 103 52 814 A1 und der US 5,866,966 Statoranordnungen bekannt, bei denen jeweils eine Spule um einen Zahn mit rechteckigem Profil angeordnet ist. Zwischen benachbarten Spulen wiederum ist jeweils ein Zahn mit dreieckigem Profil angeordnet, an dem keine Spule angebracht ist und der den radial nach außen größer werdenden Zwischenraum zwischen den benachbarten Spulen ausfüllt. Eine solche Statoranordnung umfassend eine Abwechslung von bewickelten und unbewickelten Zähnen ist ebenfalls aus der DE102005022548 bekannt.

Die US 2018/102678 A1 betrifft eine Armatur und eine rotierende elektrische Maschine umfassend eine Armatur. Die US 2010/117465 A1 betrifft eine rotierende elektrische Maschine. Die US 2012/112594 A1 betrifft einen Statorkern.

Ausgehend von den vorgenannten Statoranordnungen stellt sich die Aufgabe, eine Technik vorzuschlagen, die verbesserte Betriebseigenschaften eines rotatorischen Synchronmotors begünstigt.

Hiervon ausgehend werden vorliegend gemäß dem unabhängigen Anspruch 1 eine Statoranordnung, insbesondere für einen rotatorischen Synchronmotor, sowie gemäß dem unabhängigen Anspruch 10 ein rotatorischer Synchronmotor umfassend eine solche Statoranordnung angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt wird eine Statoranordnung gemäß Anspruch 1 vorgestellt. Die Statoranordnung umfasst einen Stator, der eine Mehrzahl von Zähnen aufweist, die über einen Umfang des Stators verteilt angeordnet und jeweils auf eine Mittelachse des Stators ausgerichtet sind und die abwechselnd ein erstes und ein zweites Querschnittsprofil aufweisen, sowie eine Mehrzahl von Nuten, die zwischen den Zähnen ausgebildet sind. Die Statoranordnung umfasst ferner eine Mehrzahl von Spulen, die um die Zähne mit dem ersten Querschnittsprofil angeordnet sind. Das zweite Querschnittsprofil weist einen parallelseitigen Rumpfabschnitt und einen daran angrenzenden abgeschrägten Kopfabschnitt auf. Zudem beträgt eine Höhe des Rumpfabschnitts des zweiten Querschnittsprofils weniger als eine Höhe der Spule, die um einen benachbarten Zahn mit dem ersten Querschnittsprofil angeordnet ist.

Das erste Querschnittsprofil weist über die Höhe der Spule einen parallelseitigen Abschnitt auf. Dabei können das erste und/oder das zweite Querschnittsprofil um eine Längsachse des jeweiligen Querschnittsprofils symmetrisch sein.

Die Höhe des Rumpfabschnitts des zweiten Querschnittsprofils kann im Bereich von 50 % bis 95 % einer Gesamthöhe des zweiten Querschnittsprofils betragen.

Der Kopfabschnitt des zweiten Querschnittsprofils ist derart abgeschrägt, dass eine kleinste Breite des Kopfabschnitts im Bereich von 80 % bis 95 % einer Breite des Rumpfabschnitts des zweiten Querschnittsprofils beträgt. Dabei sind die Zähne derart angeordnet und der Kopfabschnitt des zweiten Querschnittsprofils derart abgeschrägt, dass eine Außenseite des Kopfabschnitts des zweiten Querschnittsprofils parallel zu einer Außenseite des parallelseitigen Abschnitts des an eine selbe Nut angrenzenden Zahns mit dem ersten Querschnittsprofil ausgerichtet ist. Insbesondere kann der Zahn mit dem ersten Querschnittsprofil an dieselbe Nut wie die Außenseite des Kopfabschnitts des zweiten Querschnittsprofils angrenzen.

Jeweils eine der Spulen kann um jeweils einen der Zähne mit dem ersten Querschnittsprofil angeordnet sein. Außerdem kann jede der Spulen eine Mantelfläche aufweisen, die zu einer Außenseite des parallelseitigen Abschnitts des ersten Querschnittsprofils, um das die jeweilige Spule angeordnet ist, parallel ist.

Erfindungsgemäß beträgt eine Dicke jeder der Spulen im Bereich von 85 % bis 100 % eines kleinsten Abstands zwischen jeweils benachbarten Zähnen. Ferner können die Spulen jeweils eine gleiche Höhe aufweisen.

Das erste und das zweite Querschnittsprofil können eine gleiche Gesamthöhe aufweisen. Zusätzlich oder alternativ dazu kann eine Gesamthöhe des ersten und des zweiten Querschnittsprofils größer als die Höhe der Spule sein.

Das erste Querschnittsprofil kann in einem über die Spule hinausragenden Bereich einen abgeschrägten Kopfabschnitt aufweisen. Dabei kann der abgeschrägte Kopfabschnitt des ersten Querschnittsprofils eine Höhe im Bereich von 0,4 mm bis 0,7 mm aufweisen. Ferner kann der Kopfabschnitt des ersten Querschnittsprofils derart abgeschrägt sein, dass eine Breite des Kopfabschnitts an dessen Oberseite im Bereich von 0,8 mm bis 1,4 mm kleiner ist als eine Breite des parallelseitigen Abschnitts des ersten Querschnittsprofils.

Der Stator kann eine Laminierung von Statorblechen umfassen. Jedes der Statorbleche kann Zähne aufweisen, die über einen Umfang des Statorblechs verteilt angeordnet und jeweils auf eine Mittelachse des Statorblechs ausgerichtet sind und die abwechselnd das erste und das zweite Querschnittsprofil aufweisen, sowie eine Mehrzahl von Nuten, die zwischen den Zähnen ausgebildet sind.

Gemäß einem weiteren Aspekt wird ein rotatorischer Synchronmotor vorgestellt. Der rotatorische Synchronmotor umfasst eine Statoranordnung der vorliegend beschriebenen Art und wenigstens einen Rotor, der in der Statoranordnung angeordnet ist und dazu ausgebildet ist, bei Betrieb des rotatorischen Synchronmotors um die Mittelachse der Statoranordnung zu rotieren.

Weitere Einzelheiten und Vorteile der Erfindung werden bei nachfolgender Beschreibung von Ausführungsbeispielen anhand der Figuren deutlich werden.

Es zeigen:
- Fig. 1: eine Querschnittsansicht einer schematischen Darstellung eines Stators zur Verwendung in einer Statoranordnung gemäß einem Ausführungsbeispiel;
- Fig. 2: einen vergrößerten Ausschnitt der Querschnittsansicht eines Stators aus Fig. 1;
- Fig. 3: eine schematische Darstellung einer Statoranordnung gemäß einem Ausführungsbeispiel;
- Fig. 4: eine Querschnittsansicht eines vergrößerten Ausschnitts der Statoranordnung aus Fig. 3;
- Fig. 5: ein Schaubild des Motordrehmoments in Abhängigkeit vom Strom für verschiedene Statoranordnungen;
- Fign. 6a - 6c: Querschnittsansichten schematischer Darstellungen von rotatorischen Synchronmotoren gemäß verschiedenen Ausführungsbeispielen;
- Fig. 7: ein Schaubild der Abnahme des Dauerdrehmoments in Abhängigkeit vom Schrägungsparameter der Zähne mit zweitem Querschnittsprofil für die verschiedenen Ausführungsbeispiele aus Fign. 6a - 6c; und
- Fig. 8: ein Schaubild der Abnahme des Dauerdrehmoments sowie der Zunahme des Rastmoments jeweils in Abhängigkeit vom Schrägungsparameter der Zähne mit erstem Querschnittsprofil für das Ausführungsbeispiel aus Fig. 6c.

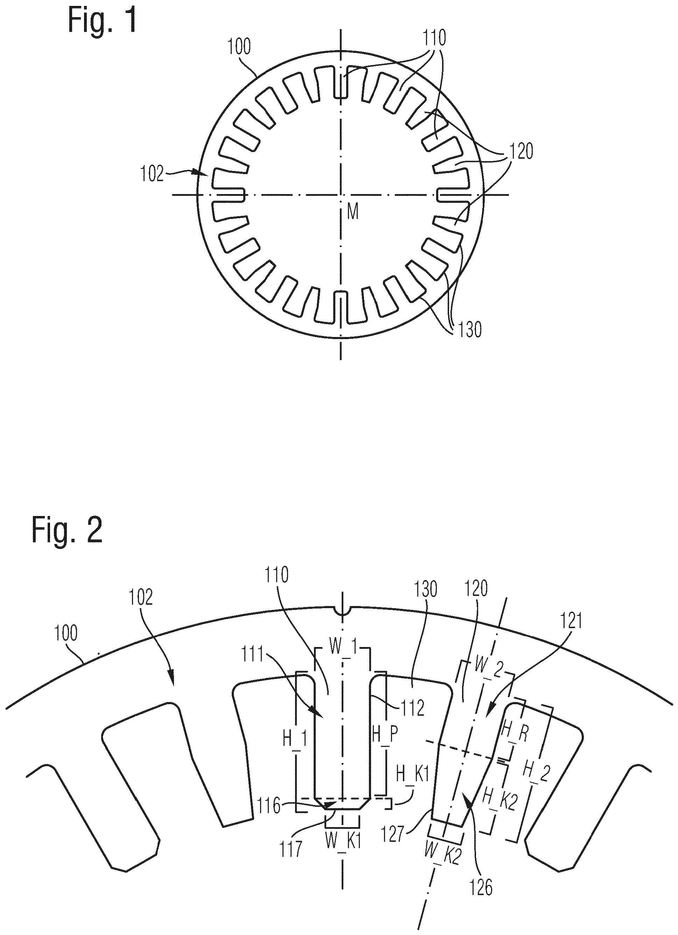

Fig. 1 zeigt eine schematische Darstellung einer Querschnittsansicht eines Stators 100 zur Verwendung in einer Statoranordnung gemäß einem Ausführungsbeispiel. Die gezeigte Querschnittsansicht entspricht beispielsweise der Ansicht eines Statorblechs, von denen mehrere gleicher Art zu dem Stator 100 durch Laminieren zusammengefügt werden können. Der Stator 100 weist einen Umfang 102 auf, entlang dem an einer Innenseite des Stators 100 Zähne 110, 120 angeordnet sind. Die Zähne 110, 120 sind dabei auf eine Mittelachse M des Stators 100 ausgerichtet. Die Zähne 110, 120 sind zudem voneinander beabstandet angeordnet. Dadurch definieren die Zähne 110, 120 jeweils eine Nut 130 zwischen benachbarten Zähnen 110, 120.

Paarweise benachbarte Zähne 110, 120 des Stators 100 weisen verschiedene Querschnittsprofile auf. Dabei weist eine erste Gruppe der Zähne 110 ein erstes Querschnittsprofil auf. Zwischen jedem Paar benachbarter Zähne 110 mit dem ersten Querschnittsprofil ist dabei ein Zahn 120 mit einem zweiten Querschnittsprofil angeordnet. Wie in Fig. 1 schematisch dargestellt, weisen die Zähne 110 einen parallelseitigen Abschnitt auf, der sich über einen wesentlichen Teil der Höhe des Zahns 110 erstreckt. Im Unterschied dazu weisen die Zähne 120 mit dem zweiten Querschnittsprofil angrenzend an einen im wesentlichen parallelseitigen Rumpfabschnitt einen abgeschrägten Kopfabschnitt auf, der sich über einen wesentlichen Teil des Zahns 120 erstreckt.

Fig. 2 zeigt einen vergrößerten Ausschnitt des Stators 110 aus Fig. 1. Gleiche Bezugszeichen wie in Fig. 1 entsprechen dabei gleichen Strukturmerkmalen. Die Zähne 110 mit dem ersten Querschnittsprofil weisen jeweils eine Gesamthöhe H_1 und die Zähne 120 mit dem zweiten Querschnittsprofil jeweils eine Gesamthöhe H_2 auf. In dem gezeigten Beispiel sind die Gesamthöhen H_1, H_2 aller Zähne 110, 120 gleich. Zudem weisen in dem gezeigten Beispiel auch die Zähne 110 mit dem ersten Querschnittsprofil einen an den parallelseitigen Abschnitt 111 angrenzenden abgeschrägten Kopfabschnitt 116 auf. Der parallelseitige Abschnitt 111 des Zahns 110 mit dem ersten Querschnittsprofil hat dabei jedoch eine größere Höhe H_P als die Höhe H_R des Rumpfbereichs 121 des Zahns 120. Entsprechend weist der abgeschrägte Kopfabschnitt 126 des Zahns 120 mit dem zweiten Querschnittsprofil eine größere Höhe H_K2 auf als die Höhe H_K1 des abgeschrägten Kopfabschnitts 116 des Zahns 110.

Durch die Schrägung des Kopfabschnitts 126 des Zahns 120 ist eine Breite des zweiten Querschnittsprofils zur Oberseite des Zahns gegenüber dem Rumpfabschnitt 121 reduziert. Insbesondere weist der Zahn 120 in dem Abschnitt 121 eine Breite W_2 auf, die sich über die Länge des Kopfabschnitts 126 auf eine geringere Breite wie W_K2 verjüngt. In ähnlicher Weise bewirkt die Schrägung des Kopfabschnitts 116 des Zahns 110 eine Verjüngung des ersten Querschnittsprofils von einer Breite W_1 im parallelseitigen Abschnitt 111 zu einer geringeren Breite W_K1 an einer Oberseite 117 des Kopfabschnitts 116.

In dem gezeigten Beispiel entspricht die Höhe H_R des Rumpfabschnitts 121 des Zahns 120 ungefähr der Hälfte der Gesamthöhe H_2 des Zahns 120. In anderen Beispielen ist die Höhe H_R dagegen in Bezug auf die Gesamthöhe H_2 größer. Beispielsweise beträgt die Höhe H_R des Rumpfabschnitts 121 in verschiedenen Beispielen des Stators 100 zwischen 50 % und 95 % der Gesamthöhe H_2, beispielsweise zwischen 55 % und 80 % der Gesamthöhe H_2 des Zahns 120. Außerdem ist die Schrägung des Kopfabschnitts 126 des Zahns 120 so bemessen, dass der Zahn 120 an einer Oberseite des Kopfabschnitts 126 eine geringste Breite W_K2 aufweist, die im Bereich von 50 % bis 95 %, erfindungsgemäß 80 % bis 95 %, der Breite W_2 des Rumpfabschnitts 121 beträgt.

Erfindungsgemäß sind die Zähne 110, 120 außerdem so in Bezug auf einander angeordnet und die Schrägung des Kopfabschnitts 126 der Zähne 120 so gewählt, dass eine Außenseite 127 des Kopfabschnitts 126 parallel zu der Außenseite 112 des an dieselbe Nut 130 wie die Außenseite 127 angrenzenden Zahns 110 mit dem ersten Querschnittsprofil ausgerichtet ist. Wie nachfolgend ausgeführt, begünstigt eine solche parallele Ausrichtung das Einbringen eines möglichst großen Spulenvolumens bei gleichzeitiger Bereitstellung eines möglichst großen Zahnvolumens zwischen benachbarten Spulen auf der Höhe des Kopfbereiches 126.

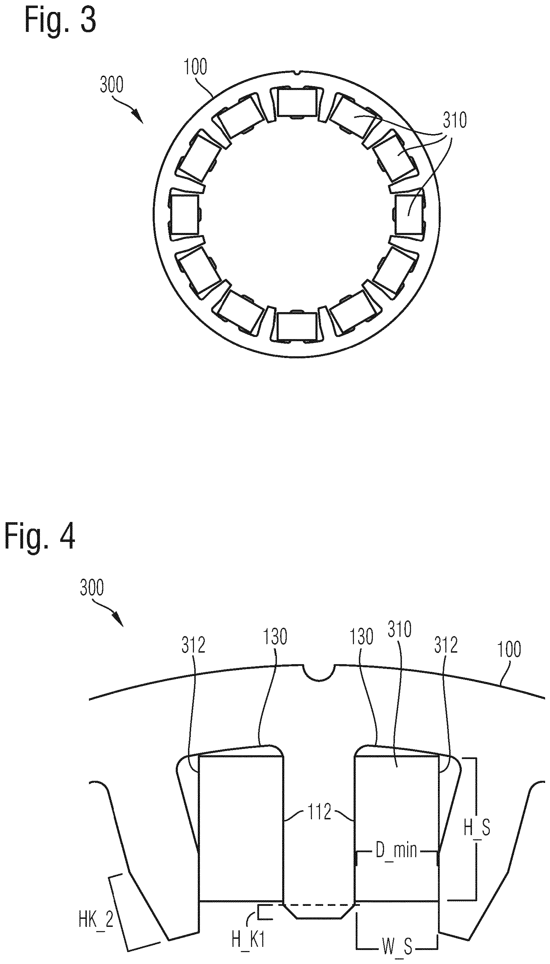

Fig. 3 zeigt eine schematische Darstellung einer Statoranordnung 300 gemäß einem Ausführungsbeispiel. Die Statoranordnung 300 umfasst einen Stator 100 wie vorangehend beschrieben. Außerdem umfasst die Statoranordnung 300 mehrere Spulen 310, von denen jeweils eine auf jeden der Zähne mit dem ersten Querschnittsprofil aufgesetzt ist. Bei der Statoranordnung 300 weisen alle Spulen eine gleiche Höhe auf. Außerdem hat jeder Zahn eine Gesamthöhe, die größer ist als die Höhe der Spulen 310.

Jede der Spulen 310 besitzt eine Mantel- oder Seitenfläche, die zumindest im Wesentlichen parallel zur Längsachse des Zahns ausgerichtet ist, um den die Spule angeordnet ist. Außerdem ist die Höhe des Rumpfabschnitts jedes der Zähne zwischen benachbarten Spulen geringer als eine Höhe der Spulen. Wie in der Zeichnung erkennbar, bewirkt die parallelseitige Ausbildung des Rumpfabschnitts der Zähne zwischen benachbarten Spulen die Bildung eines Spalts zu beiden Seiten jedes Rumpfabschnitts.

Fig. 4 zeigt eine Querschnittsansicht eines Ausschnitts der Statoranordnung 300 aus Fig. 3. Gleiche Bezugszeichen entsprechen dabei gleichen Strukturmerkmalen. Der gezeigte Ausschnitt enthält die Darstellung einer Spule 310 um einen Zahn mit dem ersten Querschnittsprofil, die zu beiden Seiten an einen Zahn mit dem zweiten Querschnittsprofil angrenzt. Der parallelseitige Abschnitt des Zahns mit dem ersten Querschnittsprofil erstreckt sich über eine gesamte Höhe H_S der Spule 310. Der abgeschrägte Kopfabschnitt des Zahns befindet sich dabei in einem Bereich, der über die Spule 310 hinausragt.

Zu beiden Seiten der Spule 310 ist auf der Höhe des Rumpfabschnitts der angrenzenden Zähne ein Spalt erkennbar. Die Zeichnung verdeutlicht zudem die vorteilhafte Wirkung der parallelen Außenseiten benachbarter Zähne zum Einbringen einer möglichst großvolumigen Spule in die Nut 130 zu beiden Seiten des Zahns. Dabei ist eine Dicke W_S der Spule 310 so gewählt dass sie zwischen 85 % und 100 % eines kleinsten Abstands D_min zwischen jeweils benachbarten Zähnen beträgt.

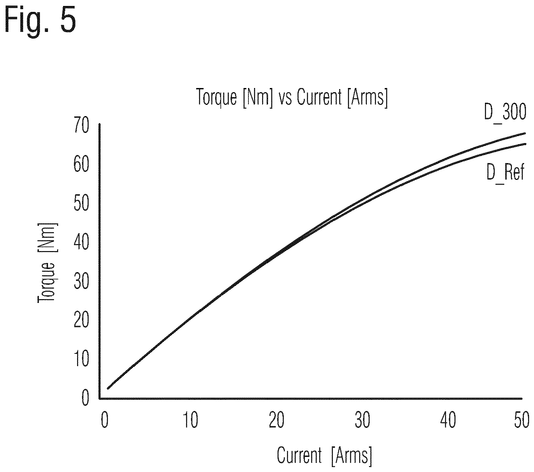

Fig. 5 zeigt ein Schaubild von Modellwerten des erzielten Motordrehmoments in Abhängigkeit vom Strom für einen rotorischen Synchronmotor mit einer Statoranordnung wie vorangehend beschrieben, Graph D_300, im Vergleich zu einem Bezugsmodell eines Motors, bei dem keine Luftspalte zwischen benachbarten Spulen und den dazwischen angeordneten Zähnen vorhanden sind, d.h., bei denen der Zwischenraum zwischen benachbarten Spulen jeweils durch einen vollständig dreieck- bzw. trapezförmigen Zahn ausgefüllt ist, Graph D_Ref.

Das Schaubild zeigt, dass insbesondere für große Ströme die hier vorgestellte Statoranordnung ein größeres Motordrehmoment gestattet. Ein entsprechendes Verhalten, d.h. ein signifikant größeres Motordrehmoment insbesondere bei hohen Strömen bei Bereitstellung der Spalte zwischen benachbarten Spulen und den jeweils dazwischenliegenden Zähnen im Rumpfbereich der Zähne, hat sich darüber hinaus in Simulationen für vielfältige Ausgestaltungen rotatorischer Synchronmotoren reproduzieren lassen. Das Verhalten beruht dabei vermutlich auf einer verringerten Wirkung von magnetischem Leckfluss, welcher nicht zum Motorfluss beiträgt.

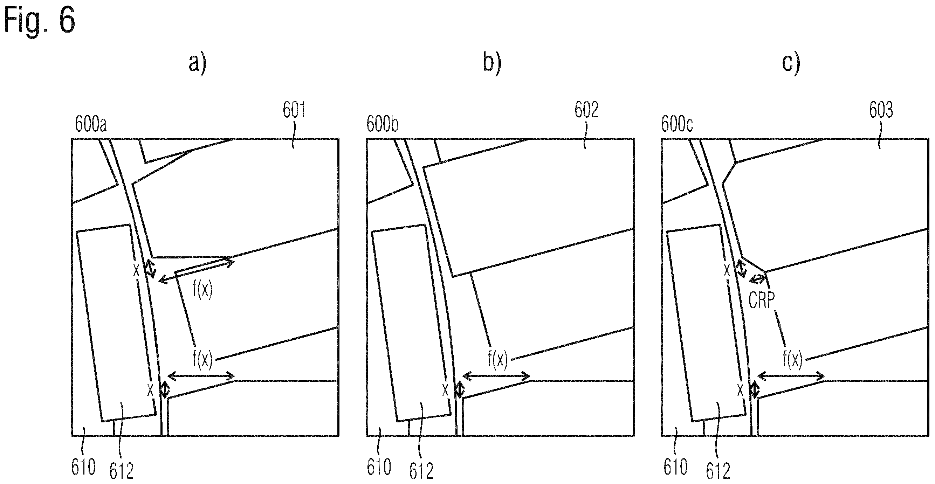

Fign. 6A bis 6C zeigen schematische Darstellungen von Ausschnittsansichten rotatorischer Synchronmotoren 600a, 600b, 600c gemäß verschiedenen Ausführungsbeispielen. Jeder der Motoren 600a, 600b, 600c umfasst eine Statoranordnung 601, 602, 603 der hier vorgestellten Art sowie einen darin angeordneten Rotor 610, der mit Permanentmagneten 612 bestückt ist. Die Motoren 600a, 600b, 600c unterscheiden sich in der jeweils gewählten Schrägung der Zähne mit erstem Querschnittsprofil.

Fig. 6a zeigt einen rotatorischen Synchronmotor 600a, bei dem die Zähne mit dem ersten Querschnittsprofil eine gleiche Schrägung im Kopfbereich des Zahns aufweisen wie die benachbarten Zähne mit dem zweiten Querschnittsprofil. In dem Beispiel von Fig. 6b dagegen weise die Zähne mit dem ersten Querschnittsprofil keinerlei Schrägung auf. In dem Beispiel von Fig. 6c schließlich haben die Zähne mit erstem Querschnittsprofil einen abgeschrägten Kopfbereich, dessen Höhe CRP geringer ist als die Höhe der Schrägung an den benachbarten Zähnen mit zweitem Querschnittsprofil. Der rotatorische Synchronmotor 600c umfasst beispielsweise eine Statoranordnung 603, die im Wesentlichen dem zuvor beschriebenen Beispiel der Statoranordnung 300 entspricht.

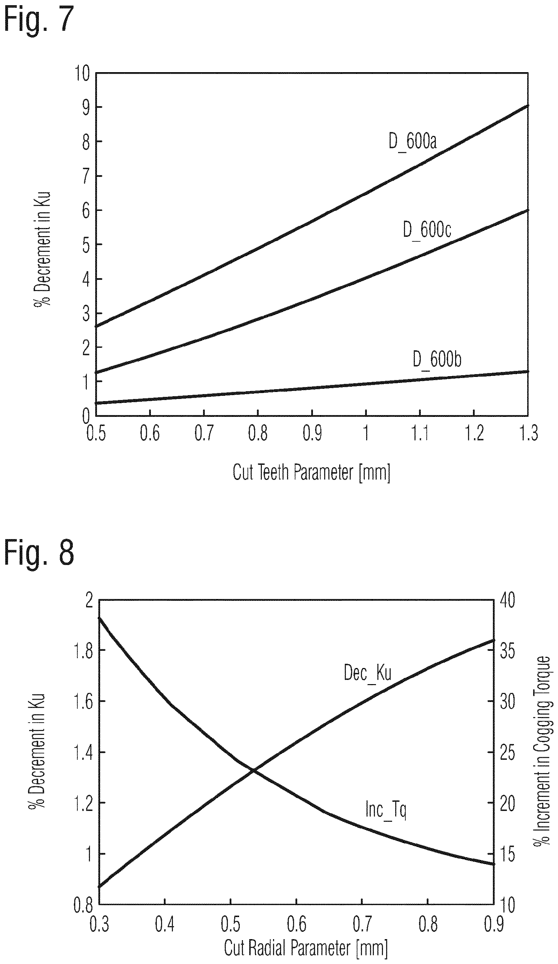

Fig. 7 zeigt ein Schaubild der Abnahme des Dauerdrehmoments Ku jedes der Beispiele aus Fign. 6a bis 6c in Abhängigkeit von der gewählten Schrägungstiefe an Zähnen mit dem zweiten Querschnittsprofil. Im Beispiel von Fig. 6a bedeutet dies wegen der dort vorliegenden gleichen Schrägungen an allen Zähnen eine entsprechend variierende Schrägung auch an den Zähnen mit erstem Querschnittsprofil.

Fig. 7 lässt erkennen, dass der Motor 600a aus Fig. 6a mit zunehmender Schrägungstiefe die stärkste Abnahme in seinem Dauerdrehmoment erfährt. Dies ist erklärbar durch die bei diesem Beispiel stärkste Verringerung von Zahnmaterial. Dem entsprechend weist der Motor 600b aus Fig. 6b dagegen die geringste Abnahme im Dauerdrehmoment auf. Der Motor 600c aus Fig. 6c zeigt schließlich eine Abhängigkeit des Dauerdrehmoments von der Schrägungstiefe, die sich zwischen denen der vorgenannten Beispiele bewegt.

Eine nur geringfügige Abnahme des Dauerdrehmoments, wie sie bei dem Beispiel aus Fig. 6b vorliegt, ist oft vorteilhaft. Durch die sehr ungleiche Gestaltung der Zähne in diesem Beispiel weist der Motor 600b jedoch starke nachteilhafte Rastmomente auf. Diesbezüglich ist das Schrägen des Kopfbereichs der Zähne mit dem ersten Querschnittsprofil geeignet, eine signifikante Reduktion der Rastmomente zu bewirken, wie nachfolgend anhand von Fig. 8 beschrieben.

Fig. 8 zeigt anhand des Beispiels aus Fig. 6c die Abnahme des Dauerdrehmoments sowie die Zunahme des Rastmoments jeweils in Abhängigkeit von der Schrägung CRP ("Cut Radial Parameter") des Kopfbereichs der Zähne mit erstem Querschnittsprofil. Wie anhand der beiden Extremfälle gemäß Fign. 6a und 6b gesagt, führt eine stärkere Abschrägung der Zähne mit erstem Querschnittsprofil einerseits zu verringerten Rastmomenten, gleichzeitig jedoch auch zu reduziertem Dauerdrehmoment. Kenntnis von dieser Abhängigkeit, wie in Fig. 8 auf Grundlage einer Simulation dargestellt, gestattet diesbezüglich eine gezielte Optimierung des ersten Querschnittsprofils in Bezug auf das Dauerdrehmoment sowie das Rastmoment.

## Patentansprüche

1. Statoranordnung (300; 601; 602; 603) umfassend:
- einen Stator (100), der eine Mehrzahl von Zähnen (110, 120) aufweist, die über einen Umfang (102) des Stators (100) verteilt angeordnet und jeweils auf eine Mittelachse (M) des Stators (100) ausgerichtet sind und die abwechselnd ein erstes (110) und ein zweites Querschnittsprofil (120) aufweisen, sowie eine Mehrzahl von Nuten (130), die zwischen den Zähnen (110, 120) ausgebildet sind, und
- eine Mehrzahl von Spulen (310), die um die Zähne mit dem ersten Querschnittsprofil (110) angeordnet sind, wobei eine Dicke (W_S) der Spulen (310) im Bereich von 85 % bis 100 % eines kleinsten Abstands (D_min) zwischen jeweils benachbarten Zähnen (110, 120) beträgt,
wobei das zweite Querschnittsprofil (120) einen parallelseitigen Rumpfabschnitt (121) und einen daran angrenzenden abgeschrägten Kopfabschnitt (126) aufweist, und eine Höhe (H_R) des Rumpfabschnitts (121) des zweiten Querschnittsprofils (120) weniger als eine Höhe (H_S) einer Spule (310) beträgt, die um einen benachbarten Zahn mit dem ersten Querschnittsprofil (110) angeordnet ist, und das erste Querschnittsprofil (110) über die Höhe (H_S) der Spule (310) einen parallelseitigen Abschnitt (111) aufweist,
**wobei**
der Kopfabschnitt (126) des zweiten Querschnittsprofils (120) derart abgeschrägt ist, dass eine kleinste Breite (W_K2) des Kopfabschnitts (126) im Bereich von 80 % bis 95 % einer Breite (W_2) des Rumpfabschnitts (121) des zweiten Querschnittsprofils beträgt, und
die Zähne (110, 120) derart angeordnet sind und der Kopfabschnitt (126) des zweiten Querschnittsprofils (120) derart abgeschrägt ist, dass eine Außenseite (127) des Kopfabschnitts (126) des zweiten Querschnittsprofils (120) parallel zu einer Außenseite (112) des parallelseitigen Abschnitts (111) des an dieselbe Nut (130) angrenzenden Zahns mit dem ersten Querschnittsprofil (110) ausgerichtet ist.

2. Statoranordnung nach Anspruch 1, wobei die Höhe (H_R) des Rumpfabschnitts (121) des zweiten Querschnittsprofils (120) im Bereich von 50 % bis 95 % einer Gesamthöhe (H_2) des zweiten Querschnittsprofils (120) beträgt.

3. Statoranordnung nach Anspruch 1 oder 2, wobei jede der Spulen (310) eine Mantelfläche (312) aufweist, die zu einer Außenseite (112) des parallelseitigen Abschnitts (111) des ersten Querschnittsprofils (110), um das die Spule (310) angeordnet ist, parallel ist.

4. Statoranordnung nach einem der vorhergehenden Ansprüche, wobei das erste Querschnittsprofil (110) und das zweite Querschnittsprofil (120) eine gleiche Gesamthöhe (H_1, H_2) aufweisen.

5. Statoranordnung nach einem der vorhergehenden Ansprüche, wobei eine Gesamthöhe (H_1) des ersten Querschnittsprofils (110) und eine Gesamthöhe (H_2) des zweiten Querschnittsprofils (120) größer als die Höhe (H_S) der Spule (310) sind.

6. Statoranordnung nach Anspruch 5, wobei das erste Querschnittsprofil (110) in einem über die Spule (310) hinausragenden Bereich einen abgeschrägten Kopfabschnitt (116) aufweist.

7. Statoranordnung nach einem der vorhergehenden Ansprüche, wobei die Spulen (310) jeweils eine gleiche Höhe (H_S) aufweisen, und jeweils eine der Spulen (310) um jeweils einen der Zähne mit dem ersten Querschnittsprofil (110) angeordnet ist.

8. Statoranordnung nach einem der vorhergehenden Ansprüche, wobei der Stator (100) eine Laminierung von Statorblechen umfasst, von denen jedes Zähne (110, 120) aufweist, die über einen Umfang (102) des Statorblechs verteilt angeordnet und jeweils auf eine Mittelachse des Statorblechs ausgerichtet sind und die abwechselnd das erste und das zweite Querschnittsprofil aufweisen, sowie eine Mehrzahl von Nuten (130), die zwischen den Zähnen (110, 120) ausgebildet sind.

9. Rotatorischer Synchronmotor (600a; 600b; 600c) umfassend eine Statoranordnung (601; 602; 603) nach einem der vorhergehenden Ansprüche und wenigstens einen Rotor (610), der in der Statoranordnung (601; 602; 603) angeordnet ist und dazu ausgebildet ist, bei Betrieb des rotatorischen Synchronmotors um die Mittelachse (M) der Statoranordnung zu rotieren.

## Claims

1. Stator assembly (300; 601; 602; 603) comprising:
- a stator (100) which has a plurality of teeth (110, 120) which are disposed so as to be distributed across a circumference (102) of the stator (100) and are in each case aligned towards a central axis (M) of the stator (100) and which in an alternating manner have a first (110) and a second cross-sectional profile (120), as well as a plurality of grooves (130) which are configured between the teeth (110, 120); and
- a plurality of coils (310) which are disposed about the teeth having the first cross-sectional profile (110), wherein a thickness (W_S) of the coils (310) is in the range of 85% to 100% of a smallest spacing (D_min) between two respective neighbouring teeth (110, 120),
wherein the second cross-sectional profile (120) has a parallel-sided body portion (121) and adjacent thereto a bevelled head portion (126), and a height (H_R) of the body portion (121) of the second cross-sectional profile (120) is less than a height (H_S) of a coil (310) which is disposed about a neighbouring tooth having the first cross-sectional profile (110), and the first cross-sectional profile (110) over the height (H_S) of the coil (310) has a parallel-sided portion (111),
**wherein**
the head portion (126) of the second cross-sectional profile (120) is bevelled in such a manner that a smallest width (W_K2) of the head portion (126) is in the range of 80% to 95% of a width (W_2) of the body portion (121) of the second cross-sectional profile; and
the teeth (110, 120) are disposed in such a manner, and the head portion (126) of the second cross-sectional profile (120) is bevelled in such a manner, that an external side (127) of the head portion (126) of the second cross-sectional profile (120) is aligned so as to be parallel to an external side (112) of the parallel-sided portion (111) of the tooth having the first cross-sectional profile (110) that is adjacent to the same grove (130).

2. Stator assembly according to Claim 1, wherein the height (H_R) of the body portion (121) of the second cross-sectional profile (120) is in the range of 50% to 95% of an overall height (H_2) of the second cross-sectional profile (120).

3. Stator assembly according to Claim 1 and 2, wherein each of the coils (310) has an envelope face (312) which is parallel to an external side (112) of the parallel-sided portion (111) of the first cross-sectional profile (110) about which the coil (310) is disposed.

4. Stator assembly according to one of the preceding claims, wherein the first cross-sectional profile (110) and the second cross-sectional profile (120) have identical overall heights (H_1, H_2).

5. Stator assembly according to one of the preceding claims, wherein an overall height (H_1) of the first cross-sectional profile (110) and an overall height (H_2) of the second cross-sectional profile (120) are larger than the height (H_S) of the coil (310).

6. Stator assembly according to Claim 5, wherein the first cross-sectional profile (110) in a region that protrudes beyond the coil (310) has a bevelled head portion (116) .

7. Stator assembly according to one of the preceding claims, wherein the coils (310) have in each case identical heights (H_S), and one of the coils (310) is in each case disposed about one of the teeth having the first cross-sectional profile (110).

8. Stator assembly according to one of the preceding claims, wherein the stator (100) comprises a lamination stack of stator sheets, each of which having teeth (110, 120) which are disposed so as to be distributed across a circumference (102) of the stator sheet and in each case aligned toward a central axis of the stator sheet and in an alternating manner have the first and the second cross-sectional profile, as well as a plurality of grooves (130) which are configured between the teeth (110, 120).

9. Rotary synchronous motor (600a; 600b; 600c) comprising a stator assembly (601; 602; 603) according to one of the preceding claims, and at least one rotor (610) which is disposed in the stator assembly (601; 602; 603) and in the operation of the rotary synchronous motor is configured for rotating about the central axes (M) of the stator assembly.

## Revendications

1. Agencement de stator (300 ; 601 ; 602 ; 603) comprenant :
- un stator (100), qui comprend une pluralité de dents (110, 120), qui sont agencées de manière répartie sur une périphérie (102) du stator (100) et sont respectivement dirigées vers un axe central (M) du stator (100) et qui présentent en alternance un premier (110) et un deuxième profil de section transversale (120), ainsi qu'une pluralité de rainures (130), qui sont formées entre les dents (110, 120), et
- une pluralité de bobines (310), qui sont agencées autour des dents munies du premier profil de section transversale (110), une épaisseur (W_S) des bobines (310) étant dans la plage allant de 85 % à 100 % d'un écart le plus petit (D_min) entre des dents respectivement voisines (110, 120),
dans lequel le deuxième profil de section transversale (120) comprend une section de corps à côtés parallèles (121) et une section de tête biseautée (126) adjacente à celle-ci, et une hauteur (H_R) de la section de corps (121) du deuxième profil de section transversale (120) est inférieure à une hauteur (H_S) d'une bobine (310), qui est agencée autour d'une dent voisine munie du premier profil de section transversale (110), et le premier profil de section transversale (110) comprend une section à côtés parallèles (111) sur la hauteur (H_S) de la bobine (310),
**dans lequel**
la section de tête (126) du deuxième profil de section transversale (120) est biseautée de telle sorte qu'une largeur la plus petite (W_K2) de la section de tête (126) soit dans la plage allant de 80 % à 95 % d'une largeur (W_2) de la section de corps (121) du deuxième profil de section transversale, et
les dents (110, 120) sont agencées et la section de tête (126) du deuxième profil de section transversale (120) est biseautée de telle sorte qu'un côté extérieur (127) de la section de tête (126) du deuxième profil de section transversale (120) soit dirigé parallèlement à un côté extérieur (112) de la section à côtés parallèles (111) de la dent adjacente à la même rainure (130) munie du premier profil de section transversale (110).

2. Agencement de stator selon la revendication 1, dans lequel la hauteur (H_R) de la section de corps (121) du deuxième profil de section transversale (120) est dans la plage allant de 50 % à 95 % d'une hauteur totale (H_2) du deuxième profil de section transversale (120).

3. Agencement de stator selon la revendication 1 ou 2, dans lequel chacune des bobines (310) comprend une surface d'enveloppe (312), qui est parallèle à un côté extérieur (112) de la section à côtés parallèles (111) du premier profil de section transversale (110), autour de laquelle la bobine (310) est agencée.

4. Agencement de stator selon l'une quelconque des revendications précédentes, dans lequel le premier profil de section transversale (110) et le deuxième profil de section transversale (120) présentent une même hauteur totale (H_1, H_2).

5. Agencement de stator selon l'une quelconque des revendications précédentes, dans lequel une hauteur totale (H_1) du premier profil de section transversale (110) et une hauteur totale (H_2) du deuxième profil de section transversale (120) sont supérieures à la hauteur (H_S) de la bobine (310).

6. Agencement de stator selon la revendication 5, dans lequel le premier profil de section transversale (110) comprend une section de tête biseautée (116) dans une zone dépassant de la bobine (310).

7. Agencement de stator selon l'une quelconque des revendications précédentes, dans lequel les bobines (310) présentent respectivement une même hauteur (H_S), et une des bobines (310) est agencée respectivement autour d'une des dents munies du premier profil de section transversale (110).

8. Agencement de stator selon l'une quelconque des revendications précédentes, dans lequel le stator (100) comprend une stratification de tôles de stator, parmi lesquelles chacune comprend des dents (110, 120), qui sont agencées de manière répartie sur une périphérie (102) de la tôle de stator et sont dirigées respectivement vers un axe central de la tôle de stator et qui présentent en alternance le premier et le deuxième profil de section transversale, ainsi qu'une pluralité de rainures (130), qui sont formées entre les dents (110, 120) .

9. Moteur synchrone rotatif (600a ; 600b ; 600c) comprenant un agencement de stator (601 ; 602 ; 603) selon l'une quelconque des revendications précédentes et au moins un rotor (610), qui est agencé dans l'agencement de stator (601 ; 602 ; 603) et qui est configuré pour tourner autour de l'axe central (M) de l'agencement de stator lors de l'exploitation du moteur synchrone rotatif.
